# EUROPÄISCHE PATENTSCHRIFT

(11) **EP 4 412 818 B1**
(45) Veröffentlichungstag und Bekanntmachung des Hinweises auf die Patenterteilung: **12.11.2025**
(21) Anmeldenummer: 22797673.5
(22) Anmeldetag: 26.09.2022
(51) Int. Cl.: B29C 65/08, B29C 65/78, B29K 705/02

(54) **SIEGELVORRICHTUNG UND VERFAHREN ZUM SIEGELN VON AUSSTATTUNGSELEMENTEN AN WERKSTÜCKE MITTELS ULTRASCHALL**
SEALING DEVICE AND METHOD FOR SEALING FITTING ELEMENTS ONTO WORKPIECES USING ULTRASOUND
DISPOSITIF ET PROCÉDÉ DE SCELLAGE D'ÉLÉMENTS RAPPORTÉS SUR DES PIÈCES AU MOYEN D'ULTRASONS

(30) Priorität: 08.10.2021 DE 102021126177
(43) Veröffentlichungstag der Anmeldung: 14.08.2024
(73) Patentinhaber: SIG Services AG, 8212 Neuhausen am Rheinfall (CH)
(72) Erfinder: BACKES, Martin, 52525 Heinsberg (DE); HAGEN, Sven, 41363 Jüchen (DE); KROMM, Paul, 52382 Niederzier (DE)
(74) Vertreter: Cohausz & Florack
(86) Internationale Anmeldenummer: PCT/EP2022/076666
(87) Internationale Veröffentlichungsnummer: WO 2023/057248

(56) Entgegenhaltungen:
- WO-A1-2018/163072
- WO-A1-2020/163694
- JP-A- S61 121 928
- US-A- 6 085 489

## Beschreibung

Die Erfindung betrifft eine Siegelvorrichtung zum Siegeln von Ausstattungselementen an Werkstücke, insbesondere in Form eines Verbundlaminats, mittels Ultraschall, mit einer Sonotrode zum Erzeugen eines Ultraschalls, mit einer Siegelfläche zum Übertragen des Ultraschalls auf das Ausstattungselementen und/oder das Werkstück, mit einem der Sonotrode gegenüberliegenden Amboss und mit einer Verstelleinrichtung zum Verstellen der Sonotrode und des Ambosses relativ zueinander von einer Offenstellung zum wenigstens teilweisen Einbringen des Ausstattungselements und des Werkstücks in einen Siegelspalt zwischen der Sonotrode und dem Amboss in eine Schließstellung zum jeweils wenigstens teilweisen Pressen des Werkstücks und des Ausstattungselements zwischen der Siegelfläche der Sonotrode und dem Amboss während des Ultraschallsiegelns und zurück. Ferner betrifft die Erfindung ein Verfahren zum Siegeln von Ausstattungselementen an Werkstücke, insbesondere in Form eines Verbundlaminats, mittels Ultraschall.

Das Dokument US6085489 offenbart eine Vorrichtung und ein Verfahren zum Siegeln von Ausgießern an Packungslaminaten mittels Ultraschall.

Werkstücke können in Form von Packungslaminaten ausgebildet sein. Die Packungslaminate dienen zur Bildung von Packungen zur Aufnahme von unterschiedlichen abzufüllenden Produkten. Bei den Produkten handelt es sich meist um ein Lebensmittel, insbesondere ein Getränk, das bedarfsweise stückige Anteile aufweisen kann. Grundsätzlich sind die Produkte schüttfähig oder rieselfähig, insbesondere fließfähig. Besonders bevorzugt sind entsprechende Packungen zur Aufnahme eines wenigstens eine flüssige Komponente aufweisenden Lebensmittels. Die Packungen sind dabei typischerweise als sogenannte Verbundpackungen ausgebildet, die grundsätzlich aus Packungslaminat, insbesondere aus einem Karton/Kunststoff-Verbundlaminat, mit einem flächigen Schichtaufbau gebildet werden.

Karton-Verbundpackungen und Karton/Kunststoff-Verbundlaminate zur Herstellung solcher Packungen haben eine Kartonschicht, die der Packung die grundlegende Stabilität und damit grundlegende Struktur verleiht. Die Kartonschicht bildet mithin die strukturgebende Trägerschicht, die die Biegesteifigkeit des Packungslaminats wenigstens maßgeblich mitbestimmt, insbesondere aber weit überwiegend bereitstellt. Anders ausgedrückt behält das Packungslaminat und die daraus hergestellte Packung seine bzw. ihre Form aufgrund der strukturgebenden Trägerschicht bei. Zudem sind meist äußere, insbesondere thermoplastische, Kunststoffschichten, etwa aus Polyethylen (PE) vorgesehen. Die Kunststoffschichten schützen den Karton vor Feuchtigkeit und die Lebensmittel vor der Aufnahme von unerwünschten Stoffen aus der Packung. Zusätzlich können noch weitere Schichten, wie etwa eine Aluminiumschicht, vorgesehen sein, die eine Diffusion von Sauerstoff und anderen Gasen durch das Packungslaminat verhindert. Darüber hinaus ermöglichen äußere thermoplastische Kunststoffschichten ein Siegeln des Packungslaminats zum Verschließen der Packungen und zum Anbringen von Ausstattungselementen wie etwa Ausgießern an die Packungen. Packungslaminate sind zudem meist mit einem Dekor bedruckt, das auf einer äußeren Kunststoffschicht aufgedruckt werden kann, wobei das Dekor typischerweise sehr viel dünner als die damit eigentliche äußere Kunststoffschicht ist. Das Packungslaminat kann auch noch weitere Schichten wie beispielsweise eine Aluminiumschicht umfassen, die eine Barrierewirkung gegen Gase und Licht bereitstellt.

Das Packungslaminat kann als Bahnmaterial oder Endlosmaterial, insbesondere als Rollenware, bereitgestellt werden, aus dem, ohne zunächst einen Zuschnitt zu erzeugen, direkt eine Verpackung geformt werden kann. Dabei wird die Rollenware zunächst umgebogen und entlang ihrer Längsränder durch Siegeln zu einem Schlauch geformt und in Längsrichtung flüssigkeitsdicht verschlossen. Anschließend werden in regelmäßigen Abständen flüssigkeitsdichte Quernähte gesiegelt. In die oben offenen Schlauchtaschen kann dann jeweils Produkt eingefüllt werden, bevor die Schlauchtaschen durch die jeweils nächsten Quernähte zu Packungen verschlossen werden.

Alternativ kann das Packungslaminat vor dem Formen der Verpackung in Längs- und/oder Querrichtung zugeschnitten werden, wodurch sogenannte Zuschnitte erzeugt werden. Diese können zu sogenannten Packungsmantelrohlingen in Form von Packungsmänteln oder Packungssleeves weiterverarbeitet werden. Dazu werden die Längsränder übereinandergelegt und unter Ausbildung einer Längssiegelnaht aufeinander gesiegelt. Man erhält so bedarfsweise rohrförmige Packungsmäntel, die flachgefaltet werden und zur Weiterverarbeitung an einem anderen Ort, insbesondere in einer Füllmaschine, gestapelt werden. In den Füllmaschinen kann dann aus den Packungsmänteln eine geformte und gefüllte Packung hergestellt werden.

Die flachgefalteten Packungsmäntel können als Stapel an ein Magazin der Füllmaschine übergeben und nacheinander aufgefaltet werden. Das Auffalten erfolgt entlang vorgefalteter Faltlinien, an denen das Packungslaminat leicht geknickt bzw. gefaltet werden kann. Entsprechende Faltlinien werden auch als sogenannte Rilllinien bezeichnet. Der entsprechend aufgefaltete Packungsmantel wird sodann an einem Ende gefaltet, verpresst und gesiegelt, also verschlossen. Das verschlossene Ende des Packungsmantels kann später den Boden oder den Kopf der Packung bilden. Die so geschaffenen, einseitig offenen Packungskörper werden in eine Füllmaschine eingeschleust, wo die Packungskörper mit heißer Sterilluft vorgewärmt und sodann, typischerweise mit Wasserstoffperoxid, sterilisiert und mit Sterilluft getrocknet werden. Die sterilen Packungskörper werden anschließend gefüllt, wonach die Öffnung der gefüllten Packungskörper verschlossen wird, bevor die entsprechende Verpackung die Füllmaschine verlässt.

Damit das Falten des Packstoffzuschnitts zur einem Packungsmantel, einem Boden des Packungskörpers und dem Kopf der Verpackung zuverlässig, schnell und einfach erfolgen kann, wird die Packstoffbahn mit Rilllinien versehen, an denen die Packstoffzuschnitte gefaltet werden können. Die Rilllinien werden dabei typischerweise mit Rillwerkzeugen in die Packstoffbahn geprägt, wobei die Packstoffbahn entlang der Rilllinien zu einer Seite der Packstoffbahn eine Vertiefung und zu der gegenüberliegenden Seite der Packstoffbahn eine Erhöhung aufweist.

Insbesondere im Kopfbereich und im Bodenbereich der Packungen sind besonders viele Rilllinien vorgesehen, weil diese zum Falten des Kopfs und des Bodens der Packungen erforderlich sind. Neben den Rilllinien wird in vielen Fällen im Kopfbereich der Packung ein Ausstattungselement in Form eines Ausgießers angebracht, über den der Inhalt der Verpackung später ausgegossen werden kann. Die Ausgießer weisen dabei typischerweise einen Grundkörper zum Durchleiten des Produkts und einen Flansch zum Verbinden des Ausgießers mit einer thermoplastischen Kunststoffschicht des Packungslaminats auf. Zudem kann noch ein Deckel vorgesehen sein, der auf den Grundkörper aufgeschraubt ist, um den Ausgießer zu verschließen. Meist ist im Packungslaminat ein Loch vorgesehen auf dieses von der späteren Innenseite oder von der späteren Außenseite der Packung der Ausgießer aufgebracht wird. Dabei kann das Loch mit einem weiteren Material überbeschichtet sein, um das Loch des Packungslaminats beispielsweise durch eine Folie zu verschließen, die im Bedarfsfalle leicht geöffnet werden kann.

Das Anbringen des Ausgießers erfolgt typischerweise so, dass der Flansch des Ausgießers um das Loch gelegt und dann mittels Ultraschall mit der angrenzenden thermoplastischen Kunststoffschicht des Packungslaminats verschweißt wird. Hierzu werden das Packungslaminat und der Ausgießer zwischen eine einen Ultraschall erzeugende Sonotrode und einen Amboss als Gegenstück gepresst und über den Ultraschall so partiell erhitzt, dass der Flansch und/oder die angrenzende Schicht des Packungslaminats aufgeschmolzen oder zumindest erweicht wird. Infolge des auf das Packungslaminat und den Ausgießer aufgebrachten Drucks werden der Ausgießer und das Packungslaminat miteinander verschweißt. Dabei kommt es aber immer wieder zu einer Beschädigung von angrenzenden Rilllinien. Hier kann das Packungslaminat aufplatzen, undicht werden und/oder delaminieren.

Ähnliche Probleme können auch beim Siegeln von anderen Ausstattungselementen an Packungslaminate entstehen, etwa beim Siegeln von Deckeln, Besteck, Strohhalmen, Give Aways und dergleichen. Es können entsprechende Probleme aber auch beim Siegeln von Ausstattungselementen an andere Werkstücke auftreten. Bei den Werkstücken handelt es sich dabei vorzugsweise um wenigstens bereichsweise flächige Werkstücke, die in Form eines Laminats ausgebildet sein können. Dabei bietet es sich an, wenn wenigsten die Oberfläche abschnittsweise aus einem thermoplastischen Kunststoff gebildet wird. Zudem treten die genannten Probleme insbesondere dann auf, wenn im Werkstück benachbart zum Ort des Siegelns eine Unstetigkeit vorhanden ist, die einem ungehinderten Weiterleiten von Schwingungen und/oder von Wärme im Wege steht.

Daher liegt der vorliegenden Erfindung die Aufgabe zugrunde, die Siegelvorrichtung und das Verfahren jeweils der eingangs genannten und zuvor näher erläuterten Art derart auszugestalten und weiterzubilden, dass Beschädigungen und Undichtigkeiten von Werkstücken wie Packungslaminaten etwa im Bereich von Rilllinien durch das Siegeln von Ausstattungselementen wie Ausgießern an die Werkstücke bzw. die Packungslaminate mittels Ultraschall vermieden werden können.

Diese Aufgabe ist bei einer Siegelvorrichtung nach dem Oberbegriff von Anspruch 1 dadurch gelöst, dass wenigstens ein Paar von miteinander korrespondierenden gegenüber der Siegelfläche schwingungsentkoppelten Klemmmitteln auf gegenüberliegenden Seiten des Siegelspalts zum Klemmen des Werkstücks in der Schließstellung vorgesehen ist und dass das wenigstens eine Paar von Klemmmitteln bezogen auf das Ausstattungselement, insbesondere den Ausgießer, in einer Richtung entlang des Siegelspalts gesehen außerhalb der Siegelfläche vorgesehen sind.

Die genannte Aufgabe ist ferner gemäß Anspruch 9 gelöst durch ein Verfahren zum Siegeln von Ausstattungselementen an Werkstücke, insbesondere in Form eines Verbundlaminats, mittels Ultraschall, vorzugsweise nach einem der Ansprüche 1 bis 8,
- bei dem das Ausstattungselement und das Werkstück jeweils wenigstens teilweise in einen Siegelspalt zwischen eine Sonotrode und einen Amboss eingebracht und dort zwischen der Sonotrode und dem Amboss gepresst werden,
- bei dem das gepresste Werkstück zwischen wenigstens einem Paar von miteinander korrespondierenden Klemmmitteln von gegenüberliegenden Seiten des Siegelspalts bezogen auf das Ausstattungselement außerhalb der Siegelfläche geklemmt wird und
- bei dem bei geklemmtem Werkstück eine gegenüber dem wenigstens einen Paar von Klemmmitteln schwingungsentkoppelte Siegelfläche der Sonotrode Ultraschall auf das gepresste Ausstattungselement und/oder das gepresste Werkstück überträgt und dabei das Ausstattungselement und das Werkstück miteinander siegelt.

Erfindungsgemäß werden also nicht nur das Werkstück, insbesondere in Form eines Packungslaminats, und das Ausstattungselement, insbesondere in Form eines Ausgießers, zwischen der Sonotrode und dem Amboss gepresst, um das Ausstattungselement mit dem Werkstück zu siegeln. Es wird zusätzlich auch das Werkstück zwischen Klemmmitteln geklemmt, die auf gegenüberliegenden Seiten des Siegelspalts und damit auf gegenüberliegenden Seiten des im Siegelspalt aufgenommenen Werkstücks angeordnet sind. Mit der Sonotrode und dem Amboss in der Schließstellung können auch die Klemmmittel zusammengefahren sein, um das Werkstück zu klemmen, während das Werkstück mit dem Ausstattungselement gesiegelt wird. Dabei sind die Klemmmittel gegenüber der Sonotrode schwingungsentkoppelt, sodass über die Klemmmittel anders als über die Siegelfläche der Sonotrode kein Ultraschall in nennenswertem Maße auf das Werkstück übertragen wird.

Zudem sind die Klemmmittel bezogen auf das Ausstattungselement außerhalb des zu siegelnden Bereichs vorgesehen. Dies muss nicht unbedingt bedeuten, dass die Klemmmittel das Werkstück außerhalb des Flanschs des Ausstattungselements klemmen. Es kann auch vorgesehen sein, dass die Klemmmittel das Werkstück zusammen mit dem Flansch des Ausstattungselements klemmen, und zwar außerhalb des zu verschweißenden Bereichs oder wenigstens außerhalb der Kontaktfläche zwischen Werkstück und/oder Ausstattungselement einerseits und der Siegelfläche der Sonotrode andererseits. Außerhalb der Siegelfläche bedeutet, dass das Klemmmittel mit seiner mit dem Werkstück in Kontakt stehenden Klemmfläche nicht auf der zu einem zentralen Bereich des Ausstattungselements hinweisenden Seite der Siegelfläche, sondern auf der gegenüberliegenden Seite der Siegelfläche angeordnet ist.

Verfahrensmäßig wird dies umgesetzt, in dem zunächst das Ausstattungselement und das Werkstück jeweils wenigstens teilweise in einen Siegelspalt zwischen eine Sonotrode und einen Amboss eingebracht und dort zwischen der Sonotrode und dem Amboss gepresst werden. Jedenfalls während des Ultraschallsiegelns von Werkstück und Ausstattungselement wird das gepresste Werkstück zwischen wenigstens einem Paar von miteinander korrespondierenden Klemmmitteln von gegenüberliegenden Seiten des Siegelspalts geklemmt, und zwar an einer Stelle bezogen auf das Ausstattungselement außerhalb der Siegelfläche der Sonotrode. Die gegenüber den Klemmmitteln schwingungsentkoppelte Sonotrode kann dann das zwischen der Sonotrode und dem Amboss gepresste Werkstück mit dem ebenfalls zwischen der Sonotrode und dem Amboss gepressten Ausstattungselements miteinander siegeln. Dies erfolgt indem die Siegelfläche der Sonotrode Ultraschallschwingungen auf das gepresste Werkstück und/oder das gepresste Ausstattungselement überträgt.

Über den Ultraschall wird letztlich die für das Siegeln nötige Energie lokal in das Werkstück und/oder das Ausstattungselement eingebracht. Diese entsprechende Energie steht dabei aber nicht nur im Bereich der Siegelnaht zur Verfügung, sondern strahlt darüber hinaus in andere Bereiche des Werkstücks aus, auch wenn die Energiedichte im Werkstück dabei mit zunehmender Distanz von der Siegelfläche der Sonotrode infolge Dissipation abnimmt. Die Leitung der Energie im Werkstück wird jedoch ganz gezielt durch die Klemmung des Werkstücks beendet oder jedenfalls stark abgeschwächt. Die Energie kann den Bereich der Klemmung nicht oder nicht ohne Weiteres passieren.

Die Energie breitet sich dabei insbesondere über Wärmeleitung und über eine Leitung von Ultraschallschwingungen durch das Werkstück aus. Im Bereich der Klemmung des Werkstücks wird die Leitung der Ultraschallschwingungen behindert, da der geklemmte Bereich infolge der Klemmung nicht oder nur bedingt schwingen kann. Der geklemmte Bereich des Werkstücks stellt also ein Hindernis für die Schwingung des Werkstücks dar. Zudem können die Klemmmittel einen erheblichen Teil der von dem Werkstück geleiteten Wärme aufnehmen. Es wird also nur noch ein deutlich geringerer Teil der Wärme über den geklemmten Bereich des Werkstücks hinweg geleitet. Die Wärmeleitung wird dabei durch die Klemmung selbst also nicht blockiert. Wärme wird auch über den geklemmten Bereich des Werkstücks hinweggeleitet. Es wird dem Werkstück aber durch den Kontakt mit den Klemmmitteln ein erheblicher Teil der in den Bereich der Klemmung geleiteten Wärme entzogen.

Durch die Klemmung des Werkstücks wird mithin beispielsweise verhindert, dass eine solch hohe Energiedichte an eine angrenzende Rilllinie des Werkstücks geleitet werden kann. Auch die Rilllinie stellt nämlich ein Hindernis für die Ausbreitung der Ultraschallschwingungen im Werkstück dar, da das Werkstück im Bereich der Rilllinie kompakter und steifer ist, weshalb das Werkstück die Schwingungen im Bereich der Rilllinie deutlich schlechter leitet als im angrenzenden Bereich des Werkstücks. Die bis zur Rilllinie gelangenden Schwingungen würden also von der Rilllinie entweder teilweise absorbiert oder teilweise reflektiert, was direkt zu einer mechanischen Belastung der Rilllinie und indirekt zu einer Wärmeentwicklung an der Rilllinie führen würde. Zu dieser Wärmeentwicklung kommt bedarfsweise noch Wärme hinzu, die über Wärmeleitung bis zur Rilllinie transportiert wird. All dies kann einzeln oder zusammengenommen zu einer Beschädigung der Rilllinie führen, was Undichtigkeiten, ein Aufplatzen und ein Delaminieren des Werkstücks zur Folge haben könnte, wenn nicht in der beschriebenen Weise von den Klemmmitteln Gebrauch gemacht werden würde.

Die zuvor für eine Rillinie beschriebenen Vorgänge können auch an anderen Unstetigkeiten eines Werkstücks auftreten. Solche Unstetigkeiten können Knicke, Sicken, Verjüngungen, Öffnungen, Bohrungen, Verbindungen und dergleichen sein. Auch diese Elemente können ein Hindernis für das ungehinderte Ausbreiten der Ultraschallschwingungen und/oder der Temperatur im Werkstück darstellen. Bei dem Werkstück kann es sich bedarfsweise auch um ein Verbundlaminat handeln. Bei diesen Werkstücken kann erfindungsgemäß möglicherweise ein unerwünschtes Delaminieren, also ein Trennen einzelner Schichten des Laminats, verhindert werden.

Ganz grundsätzlich hat sich zudem eine Klemmkraft des wenigstens einem Paar von miteinander korrespondierenden Klemmmitteln bewährt, die für typische Anwendungen zwischen 10 N und 150 N liegen kann. Besonders bevorzugt können jedoch Klemmkräfte zwischen 25 N und 100 N oder zwischen 45 N und 70 N sein.

Der besseren Verständlichkeit halber und zur Vermeidung von unnötigen Wiederholungen werden nachfolgend die Siegelvorrichtung und das Verfahren gemeinsam beschrieben, ohne jeweils im Einzelnen zwischen der Siegelvorrichtung und dem Verfahren zu unterscheiden. Für den Fachmann ergibt sich jedoch anhand des Kontextes, welche Merkmale für die Siegelvorrichtung und das Verfahren jeweils besonders bevorzugt sind.

Bei einer ersten besonders bevorzugten Ausgestaltung der Siegelvorrichtung ist das Ausstattungselement als Ausgießer und/oder das Werkstück als Packungslaminat, insbesondere in Form eines Karton/Kunststoff-Verbundlaminats, ausgebildet. In diesen Fällen werden die Vorteile der Siegelvorrichtung in besonderem Maße genutzt, da es hier ansonsten besonders leicht zu Beschädigungen des Werkstücks kommen könnte. Dabei kann ein Ausgießer auch ohne ein Packungslaminat und umgekehrt verwendet werden. Die Vorteile treten zudem in besonderem Maße in Erscheinung, wenn ein Werkstück in Form eines Karton/Kunststoff-Verbundlaminats verwendet wird. Diese neigen nämlich in besonderem Maße zum Delaminieren. Derartige Werkstücke werden zudem oft zunächst mit Rilllinien und anschließend mit einem Ausstattungselement verbunden, um eine Karton-Verbundpackung zu fertigen. Somit kann das Anbringen des Ausstattungselements zu einer nachteiligen Beeinträchtigung der Rilllinien führen. Entsprechende Werkstücke, insbesondere Karton/Kunststoff-Verbundlaminate, weisen eine Kartonschicht auf, die der Packung als strukturgebende Trägerschicht die grundlegende Stabilität und damit grundlegende Struktur verleihen soll. Zudem sind bevorzugt äußere thermoplastische Kunststoffschichten, etwa aus Polyethylen (PE), vorgesehen, um die Werkstücke siegeln zu können und um den Karton vor Feuchtigkeit zu schützen. Zusätzlich können noch weitere Schichten, wie etwa eine Aluminiumschicht, vorgesehen sein, die eine Diffusion von Sauerstoff und anderen Gasen durch das Werkstück verhindert. Die Werkstücke können ferner auf wenigstens einer Seite mit einem Dekor oder dergleichen bedruckt sein.

Alternativ oder zusätzlich kann das wenigstens eine Paar von Klemmmitteln bezogen auf den Siegelspalt wenigstens im Wesentlichen umlaufend um die Siegelfläche vorgesehen sein. Auf diese Weise kann sich die im Bereich des Ausstattungselements von der Siegelfläche der Sonotrode eingebrachte Siegelenergie nicht oder nicht in nennenswertem Maße nach außen ausbreiten, und zwar in allen Richtungen. Der Einfachheit halber und zur Vermeidung von Spannungsspitzen im Werkstück, kann es sich weiter anbieten, wenn das wenigstens eine Paar von Klemmmitteln wenigstens im Wesentlichen kreisförmig um die Siegelfläche umlaufend vorgesehen ist.

Beispielsweise können auch wenigstens zwei Paare von miteinander korrespondierenden Klemmmitteln auf gegenüberliegenden Seiten des Siegelspalts zum Klemmen des Werkstücks in der Schließstellung vorgesehen sein. Dies bietet sich für den Fall an, dass nur in bestimmten Richtungen Rilllinien benachbart zum Ausstattungselement vorgehen sind. Nur in diesen Richtungen muss die Ausbreitung der beim Siegeln eingebrachten Energie beschränkt werden. Selbiges kann auch dann der Fall sein, wenn das Werkstück eine faserhaltige Schicht, insbesondere eine Schicht aus Karton, mit einer bevorzugten Faserrichtung aufweist, die auch als Hauptfaserrichtung bezeichnet werden kann. Dann werden die in das Werkstück eingebrachten Schwingungen nämlich bevorzugt in der Hauptfaserrichtung geleitet. Somit muss nur in dieser Hauptfaserrichtung die Ausbreitung der beim Siegeln eingebrachten Energie beschränkt werden, und zwar bedarfsweise zu beiden Seiten ausgehend von dem zentralen Bereich des Ausstattungselements. Dabei sind auch das wenigstens eine weitere Paar von Klemmmitteln gegenüber der Siegelfläche schwingungsentkoppelt. Es soll über die Klemmmittel nämlich keine zusätzlichen Schwingungen in nennenswertem Maße in das Werkstück übertragen werden. Unabhängig davon ist es dabei besonders zweckmäßig, wenn die wenigstens zwei Paare von Klemmmitteln bezogen auf das Ausstattungselement und in einer Richtung entlang des Siegelspalts gesehen auf einander gegenüberliegenden Seiten außerhalb der Siegelfläche vorgesehen sind. So kann die übermäßige Ausbreitung der Siegelenergie in dem Werkstück in gegenüberliegenden Richtung behindert werden.

Wenn wenigstens ein Klemmmittel des wenigstens einen Paares von Klemmmitteln einen elastischen Abschnitt aufweist, kann eine weitere Schwingungsentkopplung von der Sonotrode erfolgen. Die Schwingungen von der Sonotrode werden dann nämlich wenigstens zu einem erheblichen Teil von dem elastischen Material absorbiert und damit dem System entzogen. Alternativ oder zusätzlich kann so bedarfsweise eine zuverlässigere Klemmung des Werkstücks erreicht werden. Der elastische Abschnitt des Klemmmittels kann dann helfen Unebenheiten des Werkstücks im Bereich der Klemmung auszugleichen. Es kann also eine gleichmäßige und zugleich hinreichende Klemmung des Werkstücks erfolgen. Besonders einfach und zweckmäßig ist es dabei, wenn der elastische Abschnitt die Klemmfläche des wenigstens einen Klemmmittels zum Klemmen des Werkstücks bereitstellt. Alternativ sollte die Klemmfläche bevorzugt ausschließlich über den elastischen Abschnitt mit weiteren Abschnitten des Klemmmittels verbunden sein. Durch den elastischen Abschnitt des Klemmmittels kann dem Werkstück zudem wenigstens ein Teil der Schwingungsenergie entzogen werden. Die Schwingungen des Werkstücks versetzen den elastischen Abschnitt in Schwingungen, der diese infolge innerer Reibung in Wärme umsetzt. Die entsprechende Wärme kann dann an die Umgebung oder weitere Abschnitte des Klemmmittels abgegeben werden. Hierbei bietet es sich ganz grundsätzlich an, wenn der elastische Abschnitt durch ein Material mit einem geringen Elastizitätsmodul gebildet ist. Der Elastizitätsmodul des Materials sollte dabei vorzugsweise kleiner 5,0 N/mm², vorzugsweise kleiner 2,5 N/mm², insbesondere kleiner 1,0 N/mm², betragen. Alternativ kann der elastische Abschnitt eine Härte von zwischen 20 und 100 Shore, insbesondere zwischen 40 und 80 Shore, aufweisen. Bei diesen Härten wurde ein zweckmäßiges Schwingungsdämpfungsverhalten erreicht.

Wenigstens ein dem Amboss zugeordnetes Klemmmittel des wenigstens einen Paares von Klemmmitteln kann der Einfachheit halber als Teil des Ambosses ausgebildet sein. Dies ist insbesondere dann der Fall, wenn das entsprechende Klemmmittel einen elastischen Abschnitt aufweist. Dann lässt sich eine zusätzliche Schwingungsentkopplung erreichen. Allerdings werden in der Regel durch das Siegeln selbst über das Ausstattungselement und/oder das Werkstück auf den Amboss übertragen. Eine zusätzliche Schwingungsentkopplung des dem Amboss zugeordneten wenigstens einen Klemmmittels kann daher meist erreicht werden, wenn dieses Klemmmittel in einer Richtung wenigstens im Wesentlichen parallel zum Siegelspalt von Amboss beabstandet ausgeführt ist. Über diesen Abstand können mithin keine Schwingungen übertragen werden, insbesondere wenn zwischen dem Amboss und dem Klemmmittel Luft oder dergleichen vorgesehen ist. Unabhängig davon kann es sich auch hier anbieten, wenn das entsprechende Klemmmittel einen elastischen Abschnitt aufweist. Dann kann eine Schwingungsentkopplung wenigstens in Bezug auf das Werkstück erreicht werden. Die Schwingungsentkopplung führt dann zeitgleich auch zu einer willkommenen Schwingungsdämpfung im Bereich der Klemmung des Werkstücks.

Eine möglichst umfassende Schwingungsentkopplung kann besonders auch in Bezug auf die Sonotrode von besonderer Bedeutung sein. Daher kann es sich anbieten, wenn wenigstens ein der Sonotrode zugeordnetes Klemmmittel des wenigstens einen Paares von Klemmmitteln in einer Richtung wenigstens im Wesentlichen parallel zum Siegelspalt von der Sonotrode beabstandet ausgeführt ist. Über diesen Abstand können mithin keine Schwingungen übertragen werden, insbesondere wenn zwischen dem Amboss und dem Klemmmittel Luft oder dergleichen vorgesehen ist.

Alternativ oder zusätzlich kann zur Dämpfung von Schwingungen auch ein Schwingungsdämpfer in Form eines massiven Bauteils mit einer erhöhten Trägheit genutzt werden. Dies ist möglich, indem wenigstens ein Klemmmittel des wenigstens einen Paares von Klemmmitteln an einem Schwingungsdämpfer mit einer Masse zwischen 50 g und 400 g, vorzugsweise zwischen 80 g und 300 g, insbesondere zwischen 125 g und 225 g, festgelegt wird. Dabei kann es sich um wenigstens ein dem Amboss zugeordnetes Klemmmittel und/oder um wenigstens ein der Sonotrode zugeordnetes Klemmmittel handeln. Letzteres kann dabei jedoch besonders zweckmäßig sein, da die Ultraschallwellen von der Sonotrode erzeugt und auch von der Sonotrode auf das Werkstück und/oder das Ausstattungselement übertragen werden. Damit die Schwingungen über den Schwingungsdämpfer vornehmlich über Trägheit gedämpft werden können, kann es sich anbieten, wenn der Schwingungsdämpfer aus einem Material mit einem Elastizitätsmodul von wenigstens 50.000 N/mm², vorzugsweise wenigstens 100.000 N/mm², insbesondere wenigstens 150.000 N/mm², gebildet ist.

Unabhängig davon kann es sich zur gleichmäßigen Schwingungsdämpfung anbieten, wenigstens ein Klemmmittel des wenigstens einen Paares von Klemmmitteln an einem wenigstens im Wesentlichen ringförmig um die Sonotrode und/oder die Siegelfläche herum umlaufend vorgesehenen Schwingungsdämpfer vorzusehen. Auch hier kann das wenigstens eine Klemmmittel dem Amboss und/oder der Sonotrode zugeordnet sein. Da die Ultraschallwellen wie ausgeführt von der Sonotrode erzeugt und von der Siegelfläche der Sonotrode auf das Werkstück und/oder das Ausstattungselement übertragen werden, kann sich hier ebenfalls in besonderem Maße anbieten, wenn das entsprechende Klemmmittel der Sonotrode zugeordnet ist.

Um eine möglichst optimale Klemmung des Werkstücks auch unter Berücksichtigung möglicher Toleranzen oder anderer Abweichungen zu erzielen, bietet es sich gegebenenfalls an, wenn wenigstens ein Klemmmittel verstellbar, vorzugsweise schwenkbar oder kippbar, vorgesehen ist. Dies ist insbesondere dann zweckmäßig, wenn wenigstens ein Klemmmittel des wenigstens einen Paares von Klemmmitteln um wenigstens eine wenigstens im Wesentlichen parallel zum Siegelspalt ausgerichtete Schwenkachse gegenüber der Sonotrode und/oder dem Amboss schwenkbar vorgesehen ist. So wird ein guter Kontakt zwischen Klemmmittel und Werkstück erreicht. Dies lässt sich zudem besonders zuverlässig erreichen, wenn das Klemmmittel frei um die Schwenkachse schwenkbar vorgesehen ist. Da die Sonotrode die Schwingungen erzeugt, kann das entsprechende Klemmmittel bevorzugt der Sonotrode zugeordnet sein. Alternativ oder zusätzlich ist es hinsichtlich der Schwingungsdämpfung besonders bevorzugt, wenn das Klemmmittel zusammen mit dem Schwingungsdämpfer um die wenigstens eine Schwenkachse schwenkbar vorgesehen ist.

Um eine zuverlässige und zweckmäßige Klemmung sicherzustellen, kann wenigstens ein Klemmmittel des wenigstens einen Paares von Klemmmitteln wenigstens im Wesentlichen in Richtung des Siegelspalts federbeaufschlagt sein. So lässt sich letztlich die Klemmkraft in gewissem Maße vorgeben oder einstellen. Der Einfachheit halber ist es dabei angebracht, das Klemmmittel zusammen mit dem Schwingungsdämpfer federbeaufschlagt vorzusehen. Auch in diesem Falle kann es besonders gute Ergebnisse liefern, wenn das Klemmmittel der die Schwingungen verursachenden Sonotrode zugeordnet ist.

Bei einer ersten besonders bevorzugten Ausgestaltung des Verfahrens wird als Ausstattungselement ein Ausgießer und/oder als Werkstück ein Packungslaminat, insbesondere in Form eines Karton/Kunststoff-Verbundlaminats, verwendet. In diesen Fällen werden die Vorteile des Verfahrens in besonderem Maße genutzt, da es hier ansonsten besonders leicht zu Beschädigungen des Werkstücks kommen könnte. Dabei kann ein Ausgießer auch ohne ein Packungslaminat und umgekehrt verwendet werden. Die Vorteile treten zudem in besonderem Maße in Erscheinung, wenn ein Werkstück in Form eines Karton/Kunststoff-Verbundlaminats verwendet wird. Diese neigen nämlich in besonderem Maße zum Delaminieren. Derartige Werkstücke werden zudem oft zunächst mit Rilllinien und anschließend mit einem Ausstattungselement verbunden, um eine Karton-Verbundpackung zu fertigen. Somit kann das Anbringen des Ausstattungselements zu einer nachteiligen Beeinträchtigung der Rilllinien führen. Entsprechende Werkstücke, insbesondere Karton/Kunststoff-Verbundlaminate, weisen eine Kartonschicht auf, die der Packung als strukturgebende Trägerschicht die grundlegende Stabilität und damit grundlegende Struktur verleihen soll. Zudem sind bevorzugt äußere thermoplastische Kunststoffschichten, etwa aus Polyethylen (PE), vorgesehen, um die Werkstücke siegeln zu können und um den Karton vor Feuchtigkeit zu schützen. Zusätzlich können noch weitere Schichten, wie etwa eine Aluminiumschicht, vorgesehen sein, die eine Diffusion von Sauerstoff und anderen Gasen durch das Werkstück verhindert. Die Werkstücke können ferner auf wenigstens einer Seite mit einem Dekor oder dergleichen bedruckt sein.

Alternativ oder zusätzlich kann das Werkstück durch die Klemmmittel des wenigstens einen Paares in einer Längserstreckung der Klemmmittel wenigstens überwiegend quer zu einer Hauptfaserrichtung des Werkstücks geklemmt werden. Damit wird die Leitung der Schwingungen und der Wärme, die vorwiegend in Richtung der Fasern erfolgt, zuverlässig durch die Klemmmittel und die entsprechende Klemmung des Werkstücks unterbrochen oder jedenfalls erheblich verringert. Dies gilt in besonderem Maße, wenn die Längserstreckung der Klemmmittel insbesondere wenigstens im Wesentlichen senkrecht zu der Hauptfaserrichtung des Werkstücks, insbesondere des Kartons, ausgerichtet ist. Dabei wird es in vielen Fällen so sein, dass nicht alle Fasern eines Werkstücks, insbesondere einer Kartonschicht des Werkstücks, parallel zueinander ausgerichtet sind. Es wird aber trotzdem oft so sein, dass die meisten und/oder die längsten Fasern des Werkstücks, insbesondere einer Kartonschicht des Werkstücks, wenigstens in etwa parallel zueinander ausgerichtet sind. Diese Richtung wird dann als die Hauptfasersichtung angesehen.

Alternativ oder zusätzlich ist es von Vorteil, wenn das Werkstück von den Klemmmitteln zwischen dem Ausstattungselement und einer Rilllinie des Werkstücks geklemmt wird. So kann verhindert werden, dass die beim Siegeln in das Werkstück als Schwingungen und Wärme eingebrachte Energie vom Werkstück derart ungehindert in Richtung der Rilllinie geleitet wird, dass es dort zu Beschädigungen der Rilllinie und oder des Werkstücks kommen kann. Die Leitung der Energie wird durch die Klemmung des Werkstücks mittels der Klemmmittel wenigstens in einem erheblichen Maß beschränkt.

Da in vielen Fällen auf gegenüberliegenden Seiten des Ausstattungselements Rilllinien angeordnet sind, insbesondere in der Hauptfaserrichtung gesehen, bietet es sich an, wenn das Werkstück von den Klemmmitteln auf gegenüberliegenden Seiten des Ausstattungselements, insbesondere in der Hauptfaserrichtung gesehen, geklemmt wird. In anderen Richtungen, etwa senkrecht zur Hauptfaserrichtung kann eine Klemmung unterbleiben, um das Werkstück dort zu schonen. Dies kann zweckmäßig sein, wenn in diesen Richtungen erst mit einigem Abstand Rilllinien vorgesehen sind oder wenn die Leitung der Energie senkrecht zur Hauptfaserrichtung so gering ist, dass die Leitung der Energie in Kauf genommen werden kann, ohne eine Beeinträchtigung der dortigen Rilllinien befürchten zu müssen.

Besonders einfach und zuverlässig kann die Ausbreitung der beim Siegeln in das Werkstück eingebrachten Energie begrenzt werden, wenn das Werkstück von den Klemmmitteln wenigstens im Wesentlichen umlaufend geklemmt wird. Dann kann eine Ausbreitung in alle Richtungen begrenzt werden. Dies ist besonders einfach und gleichmäßig zu erreichen, wenn die Klemmung des Werkstücks wenigstens im Wesentlichen kreisförmig um die Sonotrode und/oder die Siegelfläche herum erfolgt.

Um die Schwingungen insgesamt zu verringern und so aus dem System zu entziehen, kann wenigstens ein Klemmmittel des wenigstens einen Paares von Klemmmitteln wenigstens einen elastischen Abschnitt aufweisen. Über diesen können dann beim Siegeln die Ultraschallschwingungen wenigstens teilweise absorbiert werden. Hierzu muss jedoch ein entsprechender Kontakt zu dem Werkstück hergestellt werden, um die Schwingungen auf den elastischen Abschnitt zu übertragen. Dies lässt sich besonders einfach realisieren, wenn der elastische Abschnitt eine Klemmfläche eines Klemmmittels bereitstellt. Alternativ sollte die Klemmfläche bevorzugt ausschließlich über den elastischen Abschnitt mit weiteren Abschnitten des Klemmmittels verbunden sein. Die Schwingungen des Werkstücks versetzen den elastischen Abschnitt in Schwingungen, der diese infolge innerer Reibung in Wärme umsetzt. Die entsprechende Wärme kann dann an die Umgebung oder weitere Abschnitte des Klemmmittels abgegeben werden. Hierbei bietet es sich ganz grundsätzlich an, wenn der elastische Abschnitt durch ein Material mit einem geringen Elastizitätsmodul gebildet ist. Der Elastizitätsmodul des Materials sollte dabei vorzugsweise kleiner 5,0 N/mm², vorzugsweise kleiner 2,5 N/mm², insbesondere kleiner 1,0 N/mm², betragen. Alternativ kann der elastische Abschnitt eine Härte von zwischen 20 und 100 Shore, insbesondere zwischen 40 und 80 Shore, aufweisen. Bei diesen Härten wurde ein zweckmäßiges Schwingungsdämpfungsverhalten erreicht.

Alternativ oder zusätzlich zu einer entsprechenden Absorption der Schwingungen kann auch eine Dämpfung der Schwingungen vorgesehen sein. Bei der Absorption werden die Schwingungen in eine elastische Verformung des elastischen Abschnitts umgesetzt und die entsprechende Energie so dissipiert. Bei der Dämpfung wird dagegen die Trägheit einer hinreichenden Masse eines Schwingungsdämpfers genutzt, der ebenfalls derart in Kontakt mit dem Werkstück gebracht werden muss, so dass die Schwingungen von dem Werkstück auf den Schwingungsdämpfer übertragen werden können. Verfahrensmäßig können die von der Sonotrode auf das wenigstens eine Klemmmittel des wenigstens einen Paares von Klemmmitteln übertragenen Schwingungen von einem das Klemmmittel tragenden Schwingungsdämpfer einer Masse zwischen 50 g und 400 g, vorzugsweise zwischen 80 g und 300 g, insbesondere zwischen 125 g und 225 g, gedämpft werden. Dies führt zu einer ausreichenden Dissipation von Energie innerhalb des Systems, um die benachbarten Rilllinien vor dieser Energie zu schützen. Damit die Schwingungen über den Schwingungsdämpfer vornehmlich über Trägheit gedämpft werden können, kann es sich anbieten, wenn der Schwingungsdämpfer aus einem Material mit einem Elastizitätsmodul von wenigstens 50.000 N/mm², vorzugsweise wenigstens 100.000 N/mm², insbesondere wenigstens 150.000 N/mm², gebildet ist.

Alternativ oder zusätzlich ist es ebenfalls zweckmäßig, wenn die von der Sonotrode auf das wenigstens eine Klemmmittel des wenigstens einen Paares von Klemmmitteln übertragenen Schwingungen von einem das Klemmmittel tragenden, um die Sonotrode umlaufenden Schwingungsdämpfer gedämpft wird. So kommt es zu einem Ausgleich von Schwingungsenergie, bei einer in unterschiedliche Richtungen unterschiedlich ausgeprägten Weiterleitung der beim Siegeln eingebrachten Schwingungen. Dieser Ausgleich wird insbesondere dann in hohen Maße erreicht, wenn der Schwingungsdämpfer wenigstens im Wesentlichen ringförmig um die Sonotrode umlaufend ausgebildet wird.

Um einen hinreichenden Kontakt zwischen den Klemmmitteln und dem Werkstück sicherzustellen, bietet es sich an, wenn wenigstens ein Klemmmittel des wenigstens einen Paares von Klemmmitteln zum Klemmen um eine wenigstens im Wesentlichen parallel zum Siegelspalt ausgerichtete Schwenkachse geschwenkt wird. Ungenauigkeiten beim Verfahren oder hinsichtlich des Werkstücks können so ausgeglichen werden, was zu einer gleichmäßigen Klemmung wie vorbestimmt beitragen kann. Der Einfachheit halber und der besseren Dämpfung der Schwingungen wegen, kann das wenigstens eine Klemmmittel zusammen mit dem Schwingungsdämpfer um die wenigstens im Wesentlichen parallel zum Siegelspalt ausgerichtete Schwenkachse geschwenkt werden.

Das wenigstens eine Klemmmittel des wenigstens einen Paares von Klemmmitteln kann das Werkstück wenigstens teilweise mit einer wenigstens teilweise durch eine Rückstellkraft wenigstens eines Federmittels gebildeten Klemmkraft klemmen. So lässt sich bedarfsweise problemlos sicherstellen, dass die Klemmung des Werkstücks mit einer hinreichenden Klemmkraft erfolgt, um die Ausbreitung der beim Siegeln in das Werkstück eingebrachten Energie zu behindern, wobei die Klemmkraft auch nicht zu groß ist, um das Werkstück beim Klemmen nicht zu beschädigen. Dabei bietet es sich an, wenn das wenigstens eine Klemmmittel beim Klemmen zusammen mit dem Schwingungsdämpfer über das wenigstens eine Federmittel mit einer Rückstellkraft beaufschlagt wird. Dann wird zugleich sichergestellt, dass die von dem Werkstück auf das Klemmmittel übertragenen Schwingungen zuverlässig und zweckmäßig auf den Schwingungsdämpfer übertragen werden.

Nachfolgend wird die Erfindung anhand einer lediglich ein Ausführungsbeispiel darstellenden Zeichnung erläutert. In der Zeichnung zeigt
- Fig. 1A-B: eine erfindungsgemäße Siegelvorrichtung in der Offenstellung in perspektivischen Ansichten,
- Fig. 2: den Amboss der Siegelvorrichtung aus Fig. 1 in einer Draufsicht,
- Fig. 3: die Sonotrode und ein Schwingungsdämpfer der Siegelvorrichtung aus Fig. 1 in einer Draufsicht und
- Fig. 4A-C: die Siegelvorrichtung aus Fig. 1 in der Offenstellung und der Schließstellung während des erfindungsgemäßen Verfahrens.

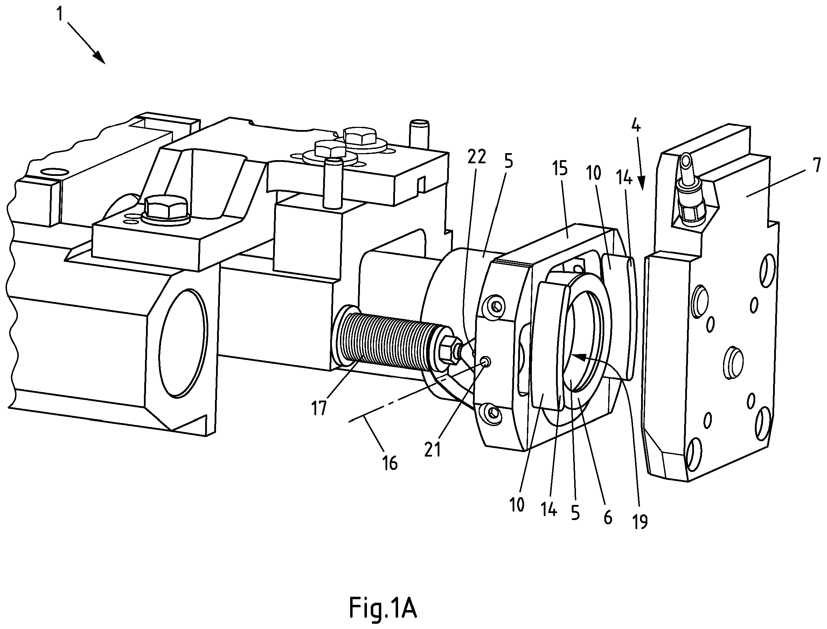

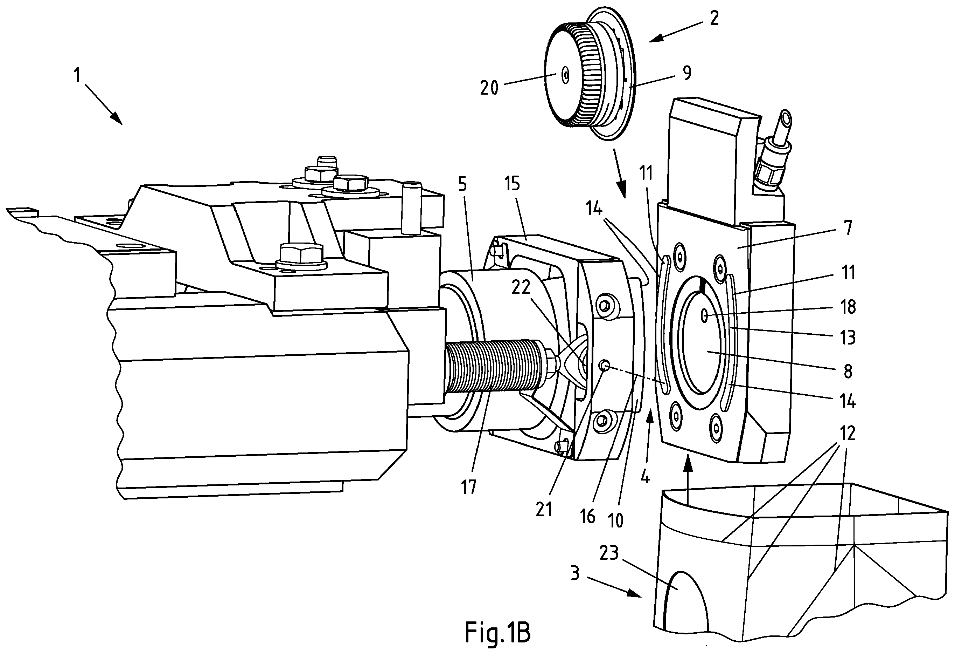

In den Fig. 1A-B ist eine Siegelvorrichtung 1 zum Siegeln von Ausstattungselementen 2 in Form von Ausgießern an Werkstücke 3 in Form eines Packungslaminats , insbesondere in Form eines Karton/Kunststoff-Verbundlaminats, mittels Ultraschall dargestellt. Die Siegelvorrichtung 1 stellt einen Siegelspalt 4 bereit in den ein Teil des Werkstücks 3 und des Ausstattungselements 2 eingebracht werden kann. Auf einer Seite des Siegelspalts 4 ist dabei eine Sonotrode 5 vorgesehen, die eine Ultraschallschwingung erzeugen und über die Siegelfläche 6 der Sonotrode 5 auf das Werkstück 3 übertragen kann. Der Sonotrode 5 gegenüberliegend ist auf der anderen Seite des Siegelspalts 4 ein Amboss 7 angeordnet, der in einer Aufnahme 8 einen Flansch 9 des Ausstattungselements 2 aufnehmen kann. Die Sonotrode 5 drückt dann das Werkstück 3 gegen diesen Flansch 9 und überträgt derweil die Ultraschallschwingung auf das Werkstück 3, um das Werkstück 3 an der entsprechenden Stelle mit dem Flansch 9 des Ausstattungselements 2 zu siegeln.

Zeitgleich klemmen die Klemmmittel 10,11 von zwei Paaren von korrespondierenden Klemmmitteln 10,11 das Werkstück 3 zwischen einander ein, um zu verhindern, dass die beim Siegeln in das Werkstück 3 eingebrachten Schwingungen und die dadurch im Werkstück 3 induzierte Wärme durch das Werkstück 3 nahezu ungehindert in Richtung angrenzender Rilllinien 12 geleitet werden. Die durch die Schwingungen und die Wärme gebildete Energie des Werkstücks 3 könnte sonst die Rilllinien 12 beschädigen. Das Werkstück 3 könnte beispielsweise im Bereich der Rilllinie 12 aufplatzen, undicht werden und/oder delaminieren.

Im Bereich des geklemmten Werkstücks 3 werden Wärme und Schwingungen von dem Werkstück 3 auf die korrespondierenden Klemmmittel 10,11 übertragen und können in diesem Maße mithin nicht von dem Werkstück 3 weiter nach außen geleitet werden. Die Klemmmittel 10,11 sind dabei jeweils einander gegenüberliegend zu beiden Seiten des Siegelspalts 4 vorgesehen und mithin entweder dem Amboss 7 oder der Sonotrode 5 zugeordnet. Die dem Amboss 7 zugeordneten Klemmmittel 11 sind aus einem elastischen Material, vorliegend aber nicht zwingend Silikon, gefertigt. Damit bildet der elastische Abschnitt 13 der Klemmmittel 11 auch die Klemmflächen 14 der entsprechenden Klemmmittel 11. Auf diese Weise wird verhindert, dass die Schwingungen ungehindert von dem Werkstück 3 auf den Amboss 7 oder von dem Amboss 7 ungehindert über die Klemmmittel 11 auf das Werkstück 3 übertragen werden. Die Schwingungen werden von den Klemmmitteln 11 teilweise aufgenommen und führen dort zu einer elastischen Verformung, durch welche die Schwingungsenergie in den Klemmmitteln 11 absorbiert wird.

Die beim Siegeln durch das Ausstattungselement 2 auf den Amboss 7 übertragenen Schwingungen können zudem durch die Klemmmittel 11 nicht oder nur bedingt auf das Werkstück 3 übertragen werden. Auch diese Schwingungen verursachen eine elastische Verformung der aus einem elastischen Material hergestellten Klemmmittel 11 und mithin zu einer Absorption der entsprechenden Energie, die mithin nicht mehr von dem Amboss 7 über die zugehörigen Klemmmittel 11 auf das Werkstück 3 übertragen werden können. Es ergibt sich letztlich über die dem Amboss 7 zugeordneten Klemmmittel 11 eine Schwingungsentkopplung zwischen dem Amboss 7 und dem Werkstück 3.

Die der Sonotrode 5 zugeordneten Klemmmittel 10 werden von einem Schwingungsdämpfer 15 gehalten, der von der Sonotrode 5 beabstandet und damit von der Sonotrode 5 und der Siegelfläche 6 der Sonotrode 5 schwingungsentkoppelt angeordnet ist. Der Schwingungsdämpfer 15 ist seinerseits an einer Schwenkachse 16 frei schwenkbar gehalten. Die Schwenkachse 16 erstreckt sich dabei wenigstens im Wesentlichen parallel zum Siegelspalt 4. So richten sich die Klemmflächen 14 der Klemmmittel 10 stets parallel zum Werkstück 3 aus, um das Werkstück 3 gleichmäßig über die Klemmflächen 14 zu klemmen.

Die Schwenkachse 16 und damit der Schwingungsdämpfer 15 sind in einer Richtung wenigstens im Wesentlichen senkrecht zum Siegelspalt 4 relativ zur Sonotrode 5 und der Siegelfläche 6 der Sonotrode 5 verstellbar. Dabei ist der Schwingungsdämpfer 15 in Richtung des Siegelspalts 4 federbelastet. Mit anderen Worten kann der Schwingungsdämpfer 15 gegen die Rückstellkraft der Federmittel 17 von dem Siegelspalt 4 beabstandet werden. So ist die maximale Klemmkraft zwischen den Paaren korrespondierender Klemmmittel 10,11 begrenzt.

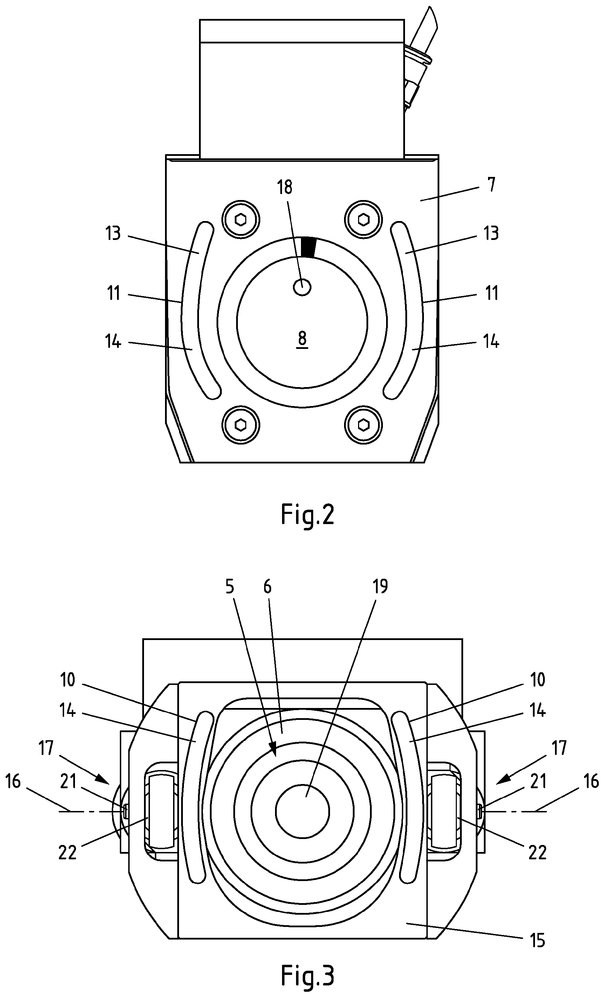

In der Fig. 2 ist der Amboss 7 in einer Draufsicht aus dem Siegelspalt 4 gesehen dargestellt. Der Amboss 7 weist eine Aufnahme 8 auf, in der der Flansch 9 des Ausstattungselements 2 aufgenommen werden kann. Beim Siegeln des Ausstattungselements 2 mit dem Werkstück 3 wird das Ausstattungselement 2 von der Sonotrode 5 über das Werkstück 3 gegen die Aufnahme 8 des Ambosses 7 gedrückt. In der Aufnahme 8 des Ambosses 7 ist eine Öffnung 18 vorgesehen, über die ein Unterdruck in der Aufnahme 8 gezogen werden kann, um auf diese Weise das Ausstattungselement 2 sicher in der Aufnahme 8 des Ambosses 7 zu halten. Zu gegenüberliegenden Seiten der Aufnahme 8 und von der Aufnahme 8 beabstandet sind die dem Amboss 7 zugeordneten Klemmmittel 11 angeordnet. Die Klemmmittel 11 stehen leicht gegenüber der Aufnahme 8 in den Siegelspalt 4 vor. Da die Klemmmittel 11 aus einem elastischen Material gebildet sind, können die Klemmmittel 11 aber geringfügig komprimiert werden, etwa soweit, dass die Klemmmittel 11 anschließend nicht mehr oder nicht mehr soweit gegenüber der Aufnahme 8 vorstehen. Die Klemmflächen 14 der Klemmmittel 11 können dann fluchtend mit der Aufnahme 8 des Ambosses 7 und/oder mit dem Flansch 9 des Ausstattungselements 2 ausgerichtet sein.

In der Fig. 3 ist die Sonotrode 5 zusammen mit dem Schwingungsdämpfer 15 in einer Draufsicht aus dem Siegelspalt 4 gesehen dargestellt. Die Sonotrode 5 weist eine zentrale Aufnahme 19 zur Aufnahme des über das Werkstück 3 nach außen vorstehenden Teils des Ausstattungselements 2 auf. Dieser Teil des Ausstattungselements 2 umfasst dabei vorzugsweise einen Schraubverschluss 20. Umlaufend um diese Aufnahme 19 ist die Siegelfläche 6 der Sonotrode 5 vorgesehen. Die Siegelfläche 6 der dargestellten und insoweit bevorzugten Sonotrode 5 ist kreisförmig ausgebildet. Mit der Siegelfläche 6 drückt die Sonotrode 5 gegen das über dem ebenfalls kreisförmig ausgebildeten Flansch 9 angeordnete Werkstück 3, um die Verbindung mit Ultraschall zu beaufschlagen und damit zu siegeln, also zu verschweißen. Um die Sonotrode 5 und die Siegelfläche 6 herum und von der Sonotrode 5 beabstandet ist der Schwingungsdämpfer 15 vorgesehen, der zwei Klemmmittel 10 trägt, die korrespondierend zu den dem Amboss 7 zugeordneten Klemmmitteln 11 ausgebildet sind. Die der Sonotrode 5 zugeordneten Klemmmittel 10 sind massiv ausgebildet und werden von dem massiveren Schwingungsdämpfer 15 gehalten. Bei der dargestellten und insoweit bevorzugten Siegelvorrichtung 1 sind die der Sonotrode 5 zugeordneten Klemmmittel 10 und der Schwingungsdämpfer 15 aus Metall, insbesondere Stahl, ausgebildet.

Der Schwingungsdämpfer 15 ist umlaufend zu der Sonotrode 5 und der Siegelfläche 6 vorgesehen und über zwei Stifte 21 in korrespondierenden Aussparungen der Siegelvorrichtung 1 gehalten. Die Stifte 21 definieren eine Schwenkachse 16, um die der Schwingungsdämpfer 15 gegenüber den Aussparungen 22 wenigstens im Wesentlichen parallel zum Siegelspalt 4 geschwenkt werden kann. Die Aussparungen 22 können relativ zur Siegelfläche 6 geringfügig in Richtung des Siegelspalts 4 vor und zurück verstellt werden. Da die Aussparungen 22 und/oder der Schwingungsdämpfer 15 über Federmittel 17 federbelastet sind, erfolgt eine Verstellung des Schwingungsdämpfers 15 relativ zur Sonotrode 5 und weg vom Amboss 7 gegen die Rückstellkraft der Federmittel 17.

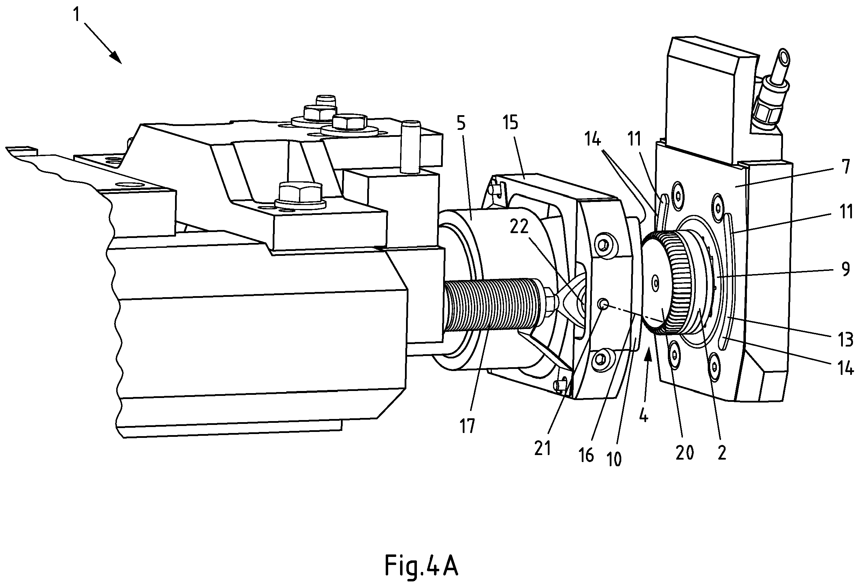

In den Fig. 4A-C sind unterschiedliche Stellungen der Siegelvorrichtung 1 während der Durchführung des Verfahrens zum Siegeln dargestellt. In der Fig. 4A ist die Siegelvorrichtung 1 mit der Sonotrode 5 und dem Amboss 7 in einer Offenstellung dargestellt, in der ein Ausstattungselement 2 in den Siegelspalt 4 eingebracht und mit dem Flansch 9 in die korrespondierende Aufnahme 8 eingesetzt werden kann. Das Ausstattungselement 2 wird in der dargestellten Stellung durch ein Anlegen eines Unterdrucks an die Aufnahme 8 gehalten.

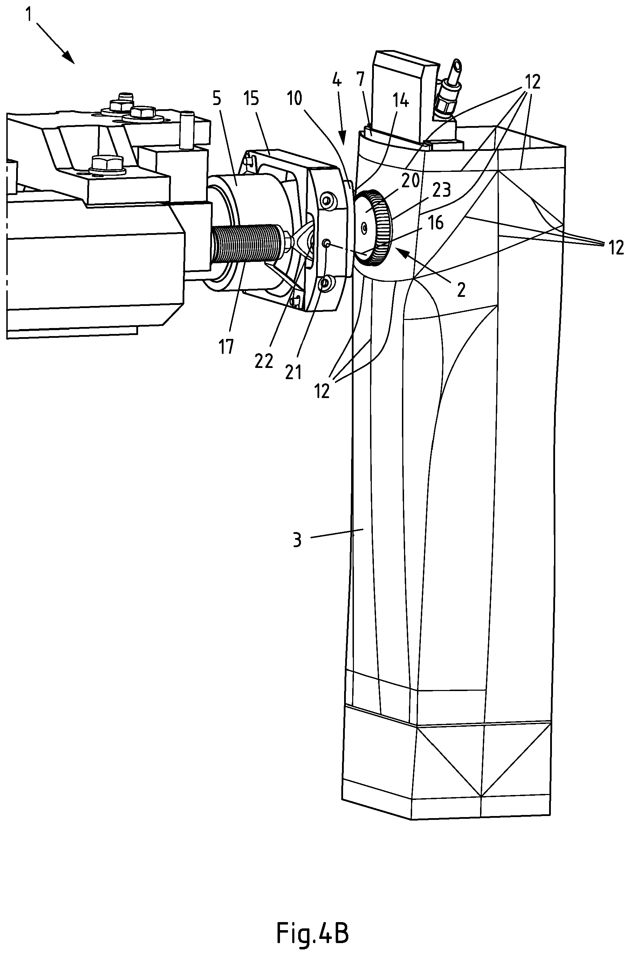

Anschließend wird, wie dies in der Fig. 4B dargestellt ist, das Werkstück 3 in den Siegelspalt 4 eingebracht, und zwar so, dass das Ausstattungselement 2 durch ein korrespondierendes Loch 23 im Werkstück 3 hindurch ragt. Es könnte aber auch zunächst das Werkstück 3 entsprechend positioniert werden. Anschließend könnte dann das Ausstattungselement 2 in den Siegelspalt 4 eingebracht und dort durch das korrespondierende Loch 23 im Werkstück 3 hindurchgesteckt werden. Das Werkstück 3 bedeckt anschließend den Flansch 9 des Ausstattungselements 2 umlaufend zu dem Loch 23 im Werkstück 3.

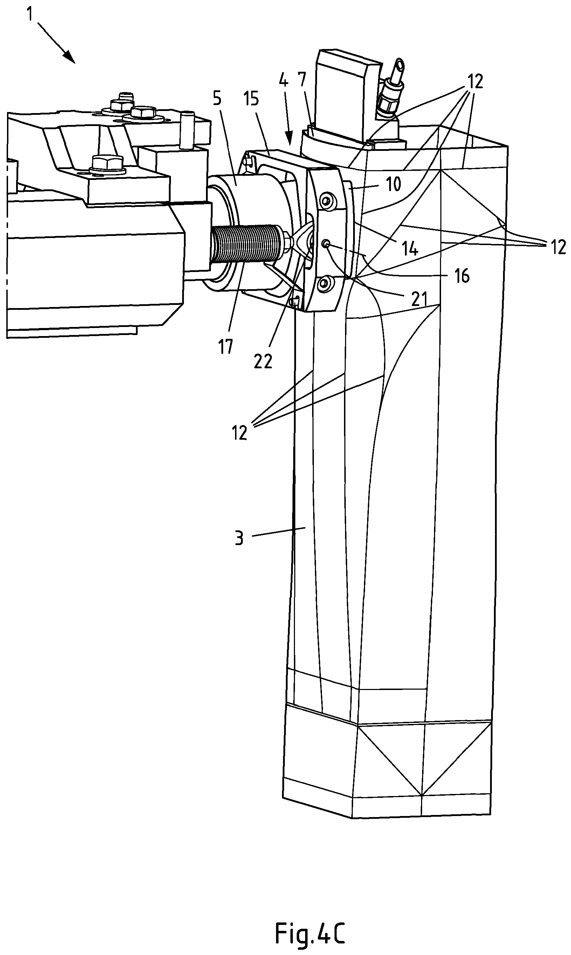

Jetzt kann die Sonotrode 5 und/oder der Amboss 7 relativ zueinander in die Schließstellung verstellt werden, wie dies in der Fig. 4C dargestellt ist. In der Schließstellung wird die Sonotrode 5 aktiviert und überträgt dann den Ultraschall auf das Werkstück 3, das sich zusammen mit dem Flansch 9 des Ausstattungselements 2 im Bereich des Flansches 9 aufheizt und so eine stoffschlüssige Verbindung zwischen dem Werkstück 3 und dem Ausstattungselement 2 eingeht. Gleichzeitig wird das Werkstück 3 zwischen den Klemmmitteln 10,11 geklemmt, so dass der Ultraschall und die Wärme im Werkstück 3 bezogen auf das Ausstattungselement 2 allenfalls bedingt nach außen über die Klemmung des Werkstücks 3 zwischen den Klemmmitteln 10,11 hinaus weitergeleitet werden kann. Die Rilllinien 12 des Werkstücks 3 in diesem Bereich werden mithin nicht übermäßig durch das Siegeln von Werkstück 3 und Ausstattungselement 2 beeinträchtigt. Nach dem Siegeln werden die Sonotrode 5 und der Amboss 7 wieder relativ zueinander zurück in die Offenstellung verstellt. Sodann kann das Werkstück 3 mit angesiegeltem Ausstattungselement 2 aus dem Siegelspalt 4 entnommen werden. Der Zyklus ist abgeschlossen und kann nun erneut durchgeführt werden, um ein weiteres Werkstück 3 mit einem Ausstattungselement 2 zu verbinden.

### Bezugszeichenliste

- 1: Siegelvorrichtung
- 2: Ausstattungselement (Ausgießer)
- 3: Werkstück (Packungslaminat)
- 4: Siegelspalt
- 5: Sonotrode
- 6: Siegelfläche
- 7: Amboss
- 8: Aufnahme
- 9: Flansch
- 10: Klemmmittel (Sonotrode)
- 11: Klemmmittel (Amboss)
- 12: Rilllinien
- 13: elastischer Abschnitt
- 14: Klemmfläche
- 15: Schwingungsdämpfe
- 16: Schwenkachse
- 17: Federmittel
- 18: Öffnung
- 19: Aufnahme
- 20: Schraubverschluss
- 21: Stift
- 22: Aussparung
- 23: Loch

## Patentansprüche

1. Siegelvorrichtung (1) zum Siegeln von Ausstattungselementen (2) an Werkstücke (3), insbesondere in Form eines Verbundlaminats, mittels Ultraschall, mit einer Sonotrode (5) zum Erzeugen eines Ultraschalls, mit einer Siegelfläche (6) zum Übertragen des Ultraschalls auf das Ausstattungselement (2) und/oder das Werkstück (3), mit einem der Sonotrode (5) gegenüberliegenden Amboss (7) und mit einer Verstelleinrichtung zum Verstellen der Sonotrode (5) und des Ambosses (7) relativ zueinander von einer Offenstellung zum wenigstens teilweisen Einbringen des Ausstattungselements (2) und des Werkstücks (3) in einen Siegelspalt (4) zwischen der Sonotrode (5) und dem Amboss (7) in eine Schließstellung zum jeweils wenigstens teilweisen Pressen des Werkstücks (3) und des Ausstattungselements (2) zwischen der Siegelfläche (6) der Sonotrode (5) und dem Amboss (7) während des Ultraschallsiegelns und zurück,
**dadurch gekennzeichnet, dass**
wenigstens ein Paar von miteinander korrespondierenden gegenüber der Siegelfläche (6) schwingungsentkoppelten Klemmmitteln (10,11) auf gegenüberliegenden Seiten des Siegelspalts (4) zum Klemmen des Werkstücks (3) in der Schließstellung vorgesehen ist und dass das wenigstens eine Paar von Klemmmitteln (10,11) bezogen auf das Ausstattungselement (2) in einer Richtung entlang des Siegelspalts (4) gesehen außerhalb der Siegelfläche (6) vorgesehen sind.

2. Siegelvorrichtung nach Anspruch 1,
**dadurch gekennzeichnet, dass**
das Ausstattungselement (2) als Ausgießer und/oder das Werkstück (3) als Packungslaminat, insbesondere in Form eines Karton/Kunststoff-Verbundlaminats, ausgebildet ist und/oder dass das wenigstens eine Paar von Klemmmitteln (10,11) bezogen auf den Siegelspalts (4) wenigstens im Wesentlichen umlaufend, wenigstens im Wesentlichen kreisförmig, um die Siegelfläche (6) vorgesehen ist.

3. Siegelvorrichtung nach Anspruch 1 oder 2,
**dadurch gekennzeichnet, dass**
wenigstens zwei Paare von miteinander korrespondierenden gegenüber der Siegelfläche (6) schwingungsentkoppelten Klemmmitteln (10,11) auf gegenüberliegenden Seiten des Siegelspalts (4) zum Klemmen des Werkstücks (3) in der Schließstellung vorgesehen sind und dass die wenigstens zwei Paare von Klemmmitteln (10,11) bezogen auf das Ausstattungselement (2) und in einer Richtung entlang des Siegelspalts (4) gesehen auf einander gegenüberliegenden Seiten außerhalb der Siegelfläche (6) vorgesehen sind.

4. Siegelvorrichtung nach einem der Ansprüche 1 bis 3,
**dadurch gekennzeichnet, dass**
wenigstens ein Klemmmittel (10,11) des wenigstens einen Paares von Klemmmitteln (10,11) einen elastischen Abschnitt (13) zur Schwingungsentkopplung von der Sonotrode (5) aufweist und dass, vorzugsweise, der elastische Abschnitt (13) die Klemmfläche (14) des Klemmmittels (10,11) zum Klemmen des Werkstücks (3) bereitstellt

5. Siegelvorrichtung nach einem der Ansprüche 1 bis 4,
**dadurch gekennzeichnet, dass**
wenigstens ein, insbesondere den elastischen Abschnitt (13) aufweisendes, dem Amboss (7) zugeordnetes Klemmmittel (11) des wenigstens einen Paares von Klemmmitteln (10,11) als Teil des Ambosses (7) oder in einer Richtung wenigstens im Wesentlichen parallel zum Siegelpalt (4) vom Amboss (7) beabstandet ausgeführt ist.

6. Siegelvorrichtung nach einem der Ansprüche 1 bis 5,
**dadurch gekennzeichnet, dass**
wenigstens ein der Sonotrode (5) zugeordnetes Klemmmittel (10) des wenigstens einen Paares von Klemmmitteln (10,11) in einer Richtung wenigstens im Wesentlichen parallel zum Siegelpalt (4) von der Sonotrode (5) beabstandet ausgeführt ist.

7. Siegelvorrichtung nach einem der Ansprüche 1 bis 6,
**dadurch gekennzeichnet, dass**
wenigstens ein, insbesondere der Sonotrode (5) zugeordnetes, Klemmmittel (10,11) des wenigstens einen Paares von Klemmmitteln (10,11) an einem Schwingungsdämpfer (15) mit einer Masse zwischen 50 g und 400 g, vorzugsweise zwischen 80 g und 300 g, insbesondere zwischen 125 g und 225 g, festgelegt sind und/oder dass wenigstens ein, insbesondere der Sonotrode (5) zugeordnetes, Klemmmittel (10,11) des wenigstens einen Paares von Klemmmitteln (10,11) an einem wenigstens im Wesentlichen ringförmig um die Sonotrode (5) umlaufend vorgesehen Schwingungsdämpfer (15) vorgesehen ist.

8. Siegelvorrichtung nach einem der Ansprüche 1 bis 7,
**dadurch gekennzeichnet, dass**
wenigstens ein, insbesondere der Sonotrode (5) zugeordnetes, Klemmmittel (10,11) des wenigstens einen Paares von Klemmmitteln (10,11), insbesondere zusammen mit dem Schwingungsdämpfer (15), um wenigstens eine Schwenkachse (16) wenigstens im Wesentlichen parallel zum Siegelpalt (4) gegenüber der Sonotrode (5) und/oder dem Amboss (7), insbesondere frei, schwenkbar vorgesehen ist und/oder dass wenigstens ein, insbesondere der Sonotrode (5) zugeordnetes, Klemmmittel (10,11) des wenigstens einen Paares von Klemmmitteln (10,11), insbesondere zusammen mit dem Schwingungsdämpfer (15), wenigstens im Wesentlichen in Richtung des Siegelspalts (4) federbeaufschlagt ist.

9. Verfahren zum Siegeln von Ausstattungselementen (2) an Werkstücke (3), insbesondere in Form eines Verbundlaminats, mittels Ultraschall, vorzugsweise nach einem der Ansprüche 1 bis 8,
- bei dem das Ausstattungselement (2) und das Werkstück (3) jeweils wenigstens teilweise in einen Siegelspalt (4) zwischen eine Sonotrode (5) und einen Amboss (7) eingebracht und dort zwischen der Sonotrode (5) und dem Amboss (7) gepresst werden,
- **dadurch gekennzeichnet dass** das gepresste Werkstück (3) zwischen wenigstens einem Paar von miteinander korrespondierenden Klemmmitteln (10,11) von gegenüberliegenden Seiten des Siegelspalts (4) bezogen auf das Ausstattungselement (2) außerhalb der Siegelfläche (6) geklemmt wird und
- dass bei geklemmtem Werkstück (3) eine gegenüber dem wenigstens einen Paar von Klemmmitteln (10,11) schwingungsentkoppelte Siegelfläche (6) der Sonotrode (5) Ultraschall auf das gepresste Ausstattungselement (2) und/oder das gepresste Werkstück (3) überträgt und dabei das Ausstattungselement (2) und das Werkstück (3) miteinander siegelt.

10. Verfahren nach Anspruch 9,
- bei dem als Ausstattungselemente (2) Ausgießer und/oder als Werkstücke (3) Packungslaminate, insbesondere in Form eines Karton/Kunststoff-Verbundlaminats, verwendet werden und/oder
- bei dem das Werkstück (3) durch die Klemmmittel (10,11) des wenigstens einen Paares von Klemmmitteln (10,11) in einer Längserstreckung der Klemmmittel (10,11) wenigstens überwiegend quer, insbesondere wenigstens im Wesentlichen senkrecht, zu einer Hauptfaserrichtung des Werkstücks (3) geklemmt wird und/oder
- bei dem das Werkstück (3) zwischen dem Ausstattungselement (2) und einer Rilllinie (12) des Werkstücks (3) geklemmt wird.

11. Verfahren nach Anspruch 9 oder 10,
- bei dem das Werkstück (3) von den Klemmmitteln (10,11) auf gegenüberliegenden Seiten des Ausstattungselements (2) geklemmt wird und
- bei dem, vorzugsweise, das Werkstück (3) von den Klemmmitteln (10,11) wenigstens im Wesentlichen umlaufend, insbesondere wenigstens im Wesentlichen kreisförmig, um das Ausstattungselement (2) geklemmt wird.

12. Verfahren nach einem der Ansprüche 9 bis 11,
- bei dem wenigstens ein Klemmmittel (10,11) des wenigstens einen Paares von Klemmmitteln (10,11) beim Siegeln die Schwingungen in einem, insbesondere eine Klemmfläche (14) bereitstellenden, elastischen Abschnitt (13) absorbiert.

13. Verfahren nach einem der Ansprüche 9 bis 12,
bei dem die von der Sonotrode (5) auf das wenigsten eine Klemmmittel (10,11) des wenigstens einen Paares von Klemmmitteln (10,11) übertragenen Schwingungen von einem das Klemmmittel (10,11) tragenden Schwingungsdämpfer (15) einer Masse von zwischen 50 g und 400 g, vorzugsweise zwischen 80 g und 300 g, insbesondere zwischen 125 g und 225 g, gedämpft wird und/oder
- bei dem die von der Sonotrode (5) auf das wenigsten eine Klemmmittel (10,11) des wenigstens einen Paares von Klemmmitteln (10,11) übertragenen Schwingungen von einem das Klemmmittel (10) tragenden, wenigstens im Wesentlichen ringförmig um die Sonotrode (5) umlaufenden, Schwingungsdämpfer (15) gedämpft wird.

14. Verfahren nach einem der Ansprüche 9 bis 13,
- bei dem wenigsten ein Klemmmittel (10,11) des wenigstens einen Paares von Klemmmitteln (10,11), insbesondere zusammen mit dem Schwingungsdämpfer, (15) zum Klemmen um eine wenigstens im Wesentlichen parallel zum Siegelspalt (4) ausgerichtete Schwenkachse (16) geschwenkt wird.

15. Verfahren nach einem der Ansprüche 9 bis 14,
- bei dem das wenigstens ein Klemmmittel (10,11) des wenigstens einen Paares von Klemmmitteln (10,11), insbesondere zusammen mit dem Schwingungsdämpfer (15), das Werkstück (3) wenigstens teilweise mit einer wenigstens teilweise durch eine Rückstellkraft wenigstens eines Federmittels (17) gebildeten Klemmkraft klemmt.

## Claims

1. Sealing device (1) for sealing fitting element (2) to workpieces (3), in particular in the form of a composite laminate, by means of ultrasound, with a sonotrode (5) for generating ultrasound, with a sealing surface (6) for transmitting the ultrasound to the fitting element (2) and/or the workpiece (3), with an anvil (7) opposite the sonotrode (5) and with an adjustment device for adjusting the sonotrode (5) and the anvil (7) relative to each other from an open position for at least partially introducing the fitting element (2) and the workpiece (3) into a sealing gap (4) between the sonotrode (5) and the anvil (7) to a closed position for at least partially pressing the workpiece (3) and the fitting element (2) between the sealing surface (6) of the sonotrode (5) and the anvil (7) during ultrasonic sealing, and back,
**characterized in that**
at least one pair of clamping means (10, 11) corresponding to one another which are vibrationally decoupled from the sealing surface (6) and are provided on opposite sides of the sealing gap (4) for clamping the workpiece (3) in the closed position, and that the at least one pair of clamping means (10, 11) are provided outside the sealing surface (6) relative to the fitting element (2) when viewed in a direction along the sealing gap (4).

2. Sealing device according to claim 1,
**characterized in that**
the equipment element (2) is configured as a spout and/or the workpiece (3) is designed as a packaging laminate, in particular in the form of a cardboard/plastic composite laminate, and/or that the at least one pair of clamping means (10, 11) is provided, relative to the sealing gap (4), at least substantially circumferentially, at least substantially circularly, around the sealing surface (6).

3. Sealing device according to claim 1 or 2,
**characterized in that**
at least two pairs of clamping means (10, 11) corresponding to one another that are vibration-decoupled from the sealing surface (6) are provided on opposite sides of the sealing gap (4) for clamping the workpiece (3) in the closed position, and that the at least two pairs of clamping means (10, 11) are provided on opposite sides outside the sealing surface (6) relative to the equipment element (2) and viewed in a direction along the sealing gap (4).

4. Sealing device according to one of claims 1 to 3,
**characterized in that**
at least a clamping means (10, 11) of the at least one pair of clamping means (10, 11) has an elastic section (13) for vibration decoupling from the sonotrode (5) and that, preferably, the elastic section (13) provides the clamping surface (14) of the clamping means (10, 11) for clamping the workpiece (3)

5. Sealing device according to one of claims 1 to 4,
**characterized in that**
at least one clamping means (11) of the at least one pair of clamping means (10, 11), preferably comprising the elastic section (13), associated with the anvil (7), is formed as part of the anvil (7) or spaced apart from the anvil (7) in a direction at least substantially parallel to the sealing gap (4).

6. Sealing device according to one of claims 1 to 5,
**characterized in that**
at least one clamping means (10) of the at least one pair of clamping means (10, 11) associated with the sonotrode (5) is spaced apart from the sonotrode (5) in a direction at least substantially parallel to the sealing plane (4).

7. Sealing device according to one of claims 1 to 6,
**characterized in that**
at least one clamping means (10, 11) of the at least one pair of clamping means (10, 11), in particular associated with the sonotrode (5), is fixed to a vibration damper (15) with a mass between 50 g and 400 g, preferably between 80 g and 300 g, in particular between 125 g and 225 g, and/or that at least one clamping means (10, 11), in particular associated with the sonotrode (5), clamping means (10, 11) of the at least one pair of clamping means (10, 11) is provided on a vibration damper (15) which is provided at least substantially annularly around the sonotrode (5).

8. Sealing device according to one of claims 1 to 7,
**characterized in that**
at least one clamping means (10, 11), in particular assigned to the sonotrode (5), of the at least one pair of clamping means (10, 11), in particular together with the vibration damper (15), is provided pivotably, about at least one pivot axis (16) at least substantially parallel to the sealing gap (4) relative to the sonotrode (5) and/or the anvil (7), in particular freely pivotable, and/or that at least one clamping means (10, 11), in particular associated to the sonotrode (5), of the at least one pair of clamping means (10, 11), in particular together with the vibration damper (15), is spring-loaded at least substantially in the direction of the sealing gap (4).

9. Method for sealing fitting elements (2) to workpieces (3), in particular in the form of a composite laminate, by means of ultrasound, preferably according to one of claims 1 to 8,
- in which the fitting element (2) and the workpiece (3) are respectively at least partially introduced into a sealing gap (4) between a sonotrode (5) and an anvil (7) and pressed there between the sonotrode (5) and the anvil (7),
**characterized in that**
- the pressed workpiece (3) is clamped between at least one pair of corresponding clamping means (10, 11) from opposite sides of the sealing gap (4) relative to the equipment element (2) outside the sealing surface (6), and
- that, with the workpiece (3) clamped, a sealing surface (6) of the sonotrode (5), which is vibration-decoupled relative to the at least one pair of clamping means (10, 11), transmits ultrasound to the pressed fitting element (2) and/or the pressed workpiece (3) and thereby seals the fitting element (2) and the workpiece (3) to one another.

10. Method according to claim 9,
- in which the fitting elements (2) are spouts and/or the workpieces (3) are packaging laminates, in particular in the form of a cardboard/plastic composite laminate, and/or
- in which the workpiece (3) is clamped by the clamping means (10, 11) of the at least one pair of clamping means (10, 11) in a longitudinal extension of the clamping means (10, 11) at least predominantly transversely, in particular at least substantially perpendicularly, to a main fiber direction of the workpiece (3) and/or
- in which the workpiece (3) is clamped between the equipment element (2) and a creasing line (12) of the workpiece (3).

11. Method according to claim 9 or 10,
- in which the workpiece (3) is clamped by the clamping means (10, 11) on opposite sides of the fitting element (2) and
- wherein, preferably, the workpiece (3) is clamped by the clamping means (10, 11) at least substantially circumferentially, in particular at least substantially circularly, around the fitting element (2).

12. Method according to one of claims 9 to 11,
- wherein at least one clamping means (10, 11) of the at least one pair of clamping means (10, 11) absorbs the vibrations in an elastic section (13), in particular providing a clamping surface (14), during sealing.

13. Method according to one of claims 9 to 12,
in which the vibrations transmitted from the sonotrode (5) to the at least one clamping means (10, 11) of the at least one pair of clamping means (10, 11) are damped by a vibration damper (15) carrying the clamping means (10, 11) and having a mass of between 50 g and 400 g, preferably between 80 g and 300 g, in particular between 125 g and 225 g, and/or
- in which the vibrations transmitted from the sonotrode (5) to the at least one clamping means (10, 11) of the at least one pair of clamping means (10, 11) are damped by a vibration damper (15) carrying the clamping means (10) and extending at least substantially annularly around the sonotrode (5).

14. Method according to one of claims 9 to 13,
- in which at least one clamping means (10, 11) of the at least one pair of clamping means (10, 11), in particular together with the vibration damper (15), is pivoted for clamping about a pivot axis (16) aligned at least substantially parallel to the sealing gap (4).

15. Method according to one of claims 9 to 14,
- wherein the at least one clamping means (10, 11) of the at least one pair of clamping means (10, 11), in particular together with the vibration damper (15), clamps the workpiece (3) at least partially with a clamping force formed at least partially by a restoring force of at least one spring means (17).

## Revendications

1. Dispositif de scellage (1) pour sceller des éléments d'équipement (2) sur des pièces (3), en particulier sous forme d'un stratifié composite, au moyen d'ultrasons, comprenant une sonotrode (5) pour générer des ultrasons, une surface de scellage (6) pour transmettre les ultrasons à l'élément d'équipement (2) et/ou à la pièce de à usiner (3), avec une enclume (7) opposée à la sonotrode (5) et avec un dispositif de réglage pour régler la sonotrode (5) et l'enclume (7) l'une par rapport à l'autre d'une position ouverte pour introduire au moins partiellement l'élément d'équipement (2) et la pièce à usiner (3) dans une fente de scellage (4) entre la sonotrode (5) et l'enclume (7) vers une position de fermeture pour presser au moins partiellement la pièce à usiner (3) et l'élément d'équipement (2) entre la surface de scellage (6) de la sonotrode (5) et l'enclume (7) pendant le scellage par ultrasons, et inversement,
**caractérisé en ce que**
au moins une paire de moyens de serrage (10, 11) correspondant l'un à l'autre, découplés en vibrations par rapport à la surface de scellage (6), est prévue sur des côtés opposés de la fente de scellage (4) pour serrer la pièce à usiner (3) dans la position de fermeture, et que la au moins une paire de moyens de serrage (10, 11) est prévue à l'extérieur de la surface de scellage (6) par rapport à l'élément d'équipement (2), dans une direction vue le long de la fente de scellage (4).

2. Dispositif de scellage selon la revendication 1,
**caractérisé en ce**
**que** l'élément d'équipement (2) est formé comme bec verseur et/ou la pièce à usiner (3) comme laminé d'emballage, en particulier sous forme d'un laminé composite carton/plastique, et/ou que la au moins une paire de moyens de serrage (10, 11) est prévue, par rapport à la fente de scellage (4), au moins essentiellement de manière périphérique, au moins essentiellement de manière circulaire, autour de la surface de scellage (6).

3. Dispositif de scellage selon la revendication 1 ou 2,
**caractérisé en ce**
**que** au moins deux paires de moyens de serrage (10, 11) correspondant les uns aux autres, découplés en vibration par rapport à la surface de scellage (6), sont prévus sur des côtés opposés de l'interstice de scellage (4) pour serrer la pièce à usiner (3) en position fermée, et que les au moins deux paires de moyens de serrage (10, 11) sont prévues sur des côtés opposés à l'extérieur de la surface de scellage (6), par rapport à l'élément d'équipement (2) et dans une direction le long de la fente de scellage (4).

4. Dispositif de scellage selon l'une des revendications 1 à 3,
**caractérisé en ce**
**qu'**au moins un moyen de serrage (10, 11) de la au moins une paire de moyens de serrage (10, 11) comporte une partie élastique (13) pour un découplage des vibrations de la sonotrode (5) et que, de préférence, la partie élastique (13) forme la surface de serrage (14) du moyen de serrage (10, 11) pour serrer la pièce à usiner (3).

5. Dispositif de scellage selon l'une des revendications 1 à 4,
**caractérisé en ce que**
au moins un moyen de serrage (11) de la au moins une paire de moyens de serrage (10, 11), associé à l'enclume (7), en particulier comportant la partie élastique (13), est réalisé comme partie de l'enclume (7) ou à distance de l'enclume (7) dans une direction au moins essentiellement parallèle au plan de scellage (4).

6. Dispositif de scellage selon l'une des revendications 1 à 5,
**caractérisé en ce que**
au moins un moyen de serrage (10) associé à la sonotrode (5) de la au moins une paire de moyens de serrage (10, 11) est formé de manière distancée de la sonotrode (5) dans une direction au moins essentiellement parallèle à la surface de scellement (4) de la sonotrode (5).

7. Dispositif de scellage selon l'une des revendications 1 à 6,
**caractérisé en ce**
**qu'**au moins un moyen de serrage (10, 11), en particulier associé à la sonotrode (5), de la au moins une paire de moyens de serrage (10, 11) est fixé sur un amortisseur de vibrations (15) avec une masse comprise entre 50 g et 400 g, de préférence entre 80 g et 300 g, en particulier entre 125 g et 225 g, et/ou qu'au moins un moyen de serrage (10, 11), en particulier associé à la sonotrode (5), des moyens de serrage (10, 11) de la au moins une paire de moyens de serrage (10, 11) est prévu sur un amortisseur de vibrations (15) prévu au moins essentiellement de manière annulaire autour de la sonotrode (5).

8. Dispositif de scellage selon l'une des revendications 1 à 7,
**caractérisé en ce**
**qu'**au moins un moyen de serrage (10, 11), en particulier associé à la sonotrode (5), de l'au moins une paire de moyens de serrage (10, 11), en particulier conjointement avec l'amortisseur de vibrations (15), est prévue de manière pivotable autour d'au moins un axe de pivotement (16) au moins essentiellement parallèle à l'espace de scellage (4) par rapport à la sonotrode (5) et/ou à l'enclume (7), en particulier de manière librement pivotable, et/ou qu'au moins un moyen de serrage (10, 11), en particulier associé à la sonotrode (5), de la au moins une paire de moyens de serrage (10, 11), en particulier conjointement avec le dispositif amortisseur de vibrations (15), est sollicité par une force élastique au moins essentiellement en direction de la fente de scellage (4).

9. Procédé pour sceller des éléments d'équipement (2) sur des pièces (3), en particulier sous la forme d'un stratifié composite, au moyen d'ultrasons, de préférence selon l'une des revendications 1 à 8,
- dans lequel l'élément d'équipement (2) et la pièce à usiner (3) sont respectivement introduits au moins partiellement dans une fente de scellage (4) entre une sonotrode (5) et une enclume (7) et y sont pressés entre la sonotrode (5) et l'enclume (7),
**caractérisé en ce**
- **que** la pièce à usiner (3) est serrée entre au moins une paire de moyens de serrage (10, 11) correspondant les uns aux autres, situés sur les côtés opposés de la fente de scellage (4) par rapport à l'élément d'équipement (2), à l'extérieur de la surface de scellage (6) et
- lorsque la pièce (3) est serrée, une surface de scellage (6) de la sonotrode (5), découplée en vibrations par rapport à la au moins une paire de moyens de serrage (10, 11), transmet des ultrasons à l'élément d'équipement pressé (2) et/ou à la pièce à usiner pressée (3) et scelle ainsi l'élément d'équipement (2) et la pièce à usiner (3) l'un à l'autre.

10. Procédé selon la revendication 9,
- dans lequel comme éléments d'équipement (2) des becs verseurs et/ou comme pièces à usiner (3) des laminés d'emballage sont utilisés, en particulier sous la forme d'un laminé composite carton/plastique, et/ou
- dans lequel la pièce (3) est serrée par les moyens de serrage (10, 11) de la au moins une paire de moyens de serrage (10, 11) dans une extension longitudinale des moyens de serrage (10, 11) au moins principalement transversalement, en particulier au moins essentiellement perpendiculairement, à une direction principale des fibres de la pièce (3) et/ou
- dans lequel la pièce à usiner (3) est serrée entre l'élément d'équipement (2) et une ligne de rainurage (12) de la pièce à usiner (3).

11. Procédé selon la revendication 9 ou 10,
- dans lequel la pièce (3) est serrée par les moyens de serrage (10, 11) sur des côtés opposés de l'élément d'équipement (2) et
- dans lequel, de préférence, la pièce (3) est serrée par les moyens de serrage (10, 11) au moins essentiellement de manière périphérique, en particulier au moins essentiellement de manière circulaire, autour de l'élément d'équipement (2).

12. Procédé selon l'une des revendications 9 à 11,
- dans lequel au moins un moyen de serrage (10, 11) de la au moins une paire de moyens de serrage (10, 11) absorbe, lors du scellage, les vibrations dans une partie élastique (13) fournissant en particulier une surface de serrage (14).

13. Procédé selon l'une des revendications 9 à 12,
dans lequel les vibrations transmises par la sonotrode (5) à au moins un moyen de serrage (10, 11) de la au moins une paire de moyens de serrage (10, 11) sont amorties par un amortisseur de vibrations (15) portant le moyen de serrage (10, 11) et ayant une masse comprise entre 50 g et 400 g, de préférence comprise entre 80 g et 300 g, en particulier entre 125 g et 225 g, et/ou
- dans lequel les vibrations transmises par la sonotrode (5) à au moins un moyen de serrage (10, 11) de la au moins une paire de moyens de serrage (10, 11) sont amorties par un amortisseur de vibrations (15) portant le moyen de serrage (10), s'étendant au moins essentiellement de manière annulaire autour de la sonotrode (5).

14. Procédé selon l'une des revendications 9 à 13,
- dans lequel au moins un moyen de serrage (10, 11) de la au moins une paire de moyens de serrage (10, 11), en particulier conjointement avec l'amortisseur de vibrations (15), est pivoté autour d'un axe de pivotement (16) orienté au moins essentiellement parallèlement à la fente de scellage (4) pour le serrage.

15. Procédé selon l'une des revendications 9 à 14,
- dans lequel le au moins un moyen de serrage (10, 11) de la au moins une paire de moyens de serrage (10, 11), en particulier conjointement avec l'amortisseur de vibrations (15), serre la pièce à usiner (3) au moins partiellement avec une force de serrage formée au moins partiellement par une force élastique d'au moins un moyen élastique (17).
